# EUROPÄISCHE PATENTSCHRIFT

(11) **EP 3 194 748 B1**
(45) Veröffentlichungstag und Bekanntmachung des Hinweises auf die Patenterteilung: **22.08.2018**
(21) Anmeldenummer: 15766436.8
(22) Anmeldetag: 15.09.2015
(51) Int. Cl.: F02B 37/16, F16K 1/36, F16K 1/46, F16K 27/02, F16K 31/06

(54) **SCHUBUMLUFTVENTIL FÜR EINEN VERDICHTER EINES VERBRENNUNGSMOTORS**
CHARGE AIR BYPASS VALVE FOR A COMPRESSOR OF AN INTERNAL COMBUSTION ENGINE
VANNE DE DÉRIVATION D'AIR POUR COMPRESSEUR D'UN MOTEUR À COMBUSTION INTERNE

(30) Priorität: 19.09.2014 DE 102014113540
(43) Veröffentlichungstag der Anmeldung: 26.07.2017
(73) Patentinhaber: Pierburg GmbH, 41460 Neuss (DE)
(72) Erfinder: LENK, Martin, 41470 Neuss (DE); PAUL, Oliver, 45896 Gelsenkirchen (DE)
(74) Vertreter: Patentanwälte ter Smitten Eberlein-Van Hoof Rütten Partnerschaftsgesellschaft mbB
(86) Internationale Anmeldenummer: PCT/EP2015/071078
(87) Internationale Veröffentlichungsnummer: WO 2016/041951

(56) Entgegenhaltungen:
- EP-A2- 2 405 167
- WO-A1-2007/048828
- DE-A1-102011 056 096
- DE-A1-102012 010 140
- DE-A1-102012 224 160
- DE-B3-102009 011 938

## Beschreibung

Die Erfindung betrifft ein Schubumluftventil für einen Verdichter eines Verbrennungsmotors mit einem Strömungsgehäuse, in dem ein Kanal ausgebildet ist, einem elektromagnetischen Aktor, einem Regelkörper, der mittels des Aktors bewegbar ist, und mittels dessen ein Durchströmungsquerschnitt des Kanals regelbar ist, einem Gehäuseinnenraum, in dem ein mit dem Regelkörper verbundener Anker des elektromagnetischen Aktors bewegbar ist, Öffnungen im Regelkörper, über die der Gehäuseinnenraum mit einem axial am Regelkörper anliegender Teil des Kanals im Strömungsgehäuse fluidisch verbunden ist, einem Ventilgehäuse, welches den elektromagnetischen Aktor und einen axialen Erstreckungsabschnitt des Regelkörpers radial umgibt, einem Radialdichtring, über den der Gehäuseinnenraum gegenüber einem radial am Regelkörper anliegenden Teil des Kanals abgedichtet ist und der axial auf einer nach radial innen weisenden ringförmigen Platte eines Stützrings aufliegt, der radial von außen mit einer Zylinderwand gegen eine Gehäusewand des Ventilgehäuses anliegt.

Schubumluftventile zur Rezirkulation von verdichtetem Frischgas gegebenenfalls mit rezirkuliertem Abgas von der Druckseite eines Verdichters eines Turboladers zurück zur Saugseite des Verdichters sind hinlänglich bekannt. Die Verbindung zwischen der Druckseite und der Saugseite des Verdichters durch eine Bypassleitung wird für den Übergang von einer hohen Last in den Schubbetrieb der Verbrennungskraftmaschine benötigt, um eine hohe Förderung der Ladedruckpumpe gegen eine geschlossene Drosselklappe und den daraus entstehenden Pumpeffekt sowie ein zu starkes plötzliches Absenken der Turbodrehzahl mit den Folgen thermodynamischer Probleme zu verhindern.

Schubumluftventile werden häufig elektromagnetisch betätigt, wobei der Ventilschließkörper des Ventils über den Anker durch die elektromagnetische Kraft bewegt wird und auf einem Ventilsitz absenkbar und von diesem abhebbar ist, der in einem Strömungsgehäuse zwischen einem Einlass und einem Auslass des Verdichters ausgebildet ist. Bei diesen Schubumluftventilen ist ein sehr schnelles Schalten aufgrund der sich schnell ändernden Lastzustände des Verdichters erforderlich. Aus diesem Grund werden Schubumluftventile vorzugsweise druckausgeglichen ausgeführt, indem im Regelkörper Öffnungen ausgebildet werden, über die der am Regelkörper axial von unten anliegende Druck in einen Gehäuseinnenraum des Ventils geleitet wird, wobei die wirksamen Durchmesser auf beiden axialen Seiten des Regelkörpers ebenfalls gleich gewählt werden. Entsprechend wirkt lediglich die Kraft einer in Schließrichtung wirkenden Feder sowie die in Öffnungsrichtung wirkende Kraft des Elektromagneten auf den Regelkörper. Bei korrekter Auslegung werden hierdurch sehr kurze Schließ- und Öffnungszeiten erreicht. Um einen solchen Druckausgleich zu schaffen, muss zumindest im geschlossenen Zustand des Ventils der Zwischenraum zwischen dem sich bewegenden Regelkörper und dem umliegenden Gehäuse abgedichtet werden. Dies erfolgt entweder über Radial- oder über Axialdichtringe, die auf einer Fläche des Gehäuses aufliegen.

Ein solches Ventil ist beispielsweise aus der DE 10 2010 026 121 A1 bekannt. Der elektromagnetische Aktor dieses Schubumluftventils ist von einem Kunststoffgehäuse umgeben, gegen welches ein Anschlussgehäuse anliegt, welches eine ringförmige Ausnehmung aufweist, in die ein weiteres als Stützring dienendes Kunststoffgehäuseteil gesteckt wird, welches den Regelkörper umgibt und einen im Querschnitt V-förmigen Radialdichtring aufnimmt. Bei der Herstellung dieses Gehäuseteils ist darauf zu achten, dass genaue Toleranzen eingehalten werden, um den Stützring am Anschlussgehäuse anbringen zu können. Um ein Auseinanderfallen der Gehäuseteile beim Transport zu verhindern, weist der Stützring zum Anschlussgehäuse eine formschlüssige Verbindung im Bereich der ringförmigen Ausnehmung auf. Dies erleichtert zwar die Montage, führt jedoch dazu, dass über den Spalt zwischen diesen Teilen Gas aus dem Gehäuseinnenraum in den seitlich angeschlossenen Kanal dringen kann. Ein solcher Gasfluss hat auch zur Folge, dass verschmutztes Gas in diesen Spalt dringt, was zu Anbackungen führt, die eine Demontage des Ventils erheblich erschweren. Des Weiteren neigen die verwendeten Kunststoffteile auch aufgrund ihrer geringeren thermischen Belastbarkeit dazu, dass eine erhöhte Versottung des Ventils vorliegt. Alternativ müssen sehr teure Kunststoffe verwendet werden.

Des Weiteren ist aus der DE 10 2011 056 096 A1 ein Elektromagnetventil mit einem zweiteiligen Gehäuse bekannt, bei dem das auf dem Strömungsgehäuse aufliegende Gehäuseteil eine ringförmige Ausnehmung aufweist, in die ein Stützring ragt, auf dem der Dichtring angeordnet ist und der diesen Dichtring umgibt. Eine sichere Befestigung dieses Rings wird nicht offenbart.

Es stellt sich daher die Aufgabe, ein Schubumluftventil zur Verfügung zu stellen, welches leicht zu montieren und zu demontieren ist, möglichst unempfindlich gegen Versottung und thermisch belastbar ist. Ein Gasfluss über einen Spalt zwischen den beiden voneinander abzutrennenden Kanalteilen soll vermieden werden. Die Kosten zur Herstellung eines solchen Schubumluftventils sollen gesenkt werden.

Diese Aufgaben werden durch ein Schubumluftventil für einen Verdichter eines Verbrennungsmotors mit den Merkmalen des Hauptanspruchs 1 gelöst.

Dadurch, dass der Radialdichtring radial außen gegen die Gehäusewand des Ventilgehäuses anliegt, wobei der Stützring eine Zylinderwand aufweist, welche die Gehäusewand des Ventilgehäuses umgibt und am zum Aktor weisenden Ende sich von der Zylinderwand des Stützrings eine radial nach außen weisende ringförmige Platte erstreckt, die axial zwischen dem Ventilgehäuse und dem Strömungsgehäuse geklemmt ist, besteht kein vom Gehäuseinnenraum aus für den Gasstrom zugänglicher Spalt zwischen dem Stützring und dem Ventilgehäuse, so dass ein Gasfluss ohne zusätzliche Bauteile durch diesen Spalt vermieden wird. Bei der Montage kann zunächst der Radialdichtring eingeschoben und anschließend der Stützring über die Gehäusewand geschoben werden. Hierbei sind keine engen Toleranzen einzuhalten, so dass Kosten gesenkt werden und die Versottung des Ventils während des Betriebes verringert wird. Auch weist der Stützring eine sehr einfach und kostengünstig herstellbare Form auf.

In einer vorteilhaften Weiterführung weist der Stützring am vom Aktor abgewandten axialen Ende der Zylinderwand eine ringförmige nach radial innen weisende Platte auf, deren Innendurchmesser geringfügig größer ist als der Außendurchmesser des Regelkörpers und auf der der Radialdichtring aufliegt. Dies bedeutet, dass der Stützring im Wesentlichen topfförmig mit teilweise offenem Boden ausgeführt ist, welche mit beliebigen Materialien ohne hohe Werkzeugkosten hergestellt werden kann.

Besonders vorteilhaft ist es, wenn der Stützring ein Tiefziehteil aus Metall ist. Ein solches Tiefziehteils ist sehr kostengünstig herzustellen. Des Weiteren weist das Metall eine hohe thermische Belastbarkeit auf und ist unempfindlich gegen Versottung.

In einer Weiterbildung der Erfindung ist die Höhe der Zylinderwand des Stützrings geringfügig größer als die vom Aktor weg weisende Gehäusewand des Ventilgehäuses, wodurch ein Anliegen der oberen Platte am Ventilgehäuse und eine daraus folgende Dichtigkeit sichergestellt wird.

Um eine Strömung vom radial am Regelkörper anliegenden Kanal in den Außenbereich zu verhindern, ist außerhalb der radial nach außen weisenden ringförmigen Platte ein Dichtring zwischen dem Strömungsgehäuse und dem Ventilgehäuse eingeklemmt.

Vorzugsweise ist der Stützring über die Gehäusewand am Ventilgehäuse befestigt, so dass eine vollständige Vormontage und ein Transport des fertig montierten jedoch nicht eingebauten Ventils ermöglicht werden.

Besonders bevorzugt ist es, wenn die Zylinderwand des Stützrings an ihrem axial vom Aktor weg weisenden Ende derart gegen eine Erweiterung des Ventilgehäuses anliegt, dass eine zur Befestigung dienende Klemmkraft erzeugt wird. Durch diese Klemmkraft kann das Schubumluftventil vollständig vormontiert transportiert und im Strömungsgehäuse eingesetzt werden, da ein Verlust des Stützrings vermieden wird.

In einer hierzu weiterführenden vorteilhaften Ausbildung ist am Ventilgehäuse zwischen der Erweiterung und dem Aktor eine Einschnürung ausgebildet, welche federnd verformbar ist. Durch diese geringfügige Verformbarkeit kann auf einfache Weise die Klemmkraft für den Stützring zur Verfügung gestellt werden.

Es wird somit ein Schubumluftventil für einen Verdichter eines Verbrennungsmotors geschaffen, bei dem eine Gasströmung entlang des Spaltes zwischen dem Ventilgehäuse und dem Stützring des Radialdichtringes zuverlässig vermieden wird, ohne zusätzliche Bauteile zu benötigen. Dies erhöht die Dichtigkeit zwischen den beiden voneinander zu trennenden Kanalabschnitten des Strömungsgehäuses. Des Weiteren ist ein solches Ventil kostengünstig herzustellen und zu montieren, wobei eine vollständige Vormontage zum Transport des Ventils ebenfalls möglich ist. Das Schubumluftventil ist thermisch belastbar und weist lediglich eine geringe Versottungsneigung auf.

Ein Ausführungsbeispiel eines erfindungsgemäßen Schubumluftventils für einen Verdichter eines Verbrennungsmotors ist in den Figuren dargestellt und wird nachfolgend beschrieben.
Figur 1 zeigt eine Seitenansicht eines erfindungsgemäßen Schubumluftventils in geschnittener Darstellung.
Figur 2 zeigt eine Seitenansicht eines Stützrings des in Figur 1 dargestellten erfindungsgemäßen Schubumluftventils in geschnittener Darstellung.

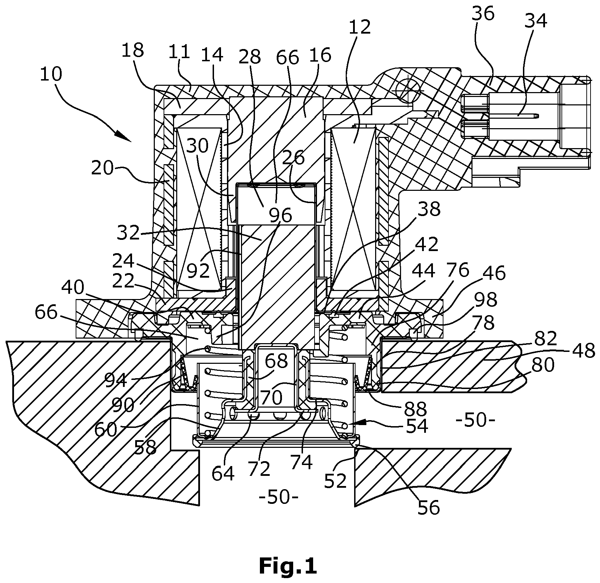

Das in der Figur 1 dargestellte, erfindungsgemäße Schubumluftventil besteht aus einem elektromagnetischen Aktor 10 mit einem Aktorgehäuse 11, in dem eine Spule 12 auf einem Spulenträger 14 angeordnet ist. Im radial inneren Bereich des Spulenträgers 14 ist ein magnetisierbarer Kern 16 befestigt, dessen axiales Ende über den Spulenträger 14 hinausragt, wobei der Kern 16 an diesem axialen Ende von einem Rückschlussblech 18 umgeben ist, welches in Verbindung mit einem die Spule 12 umgebenden Joch 20 steht. Am zum Kern 16 entgegengesetzten Ende des Spulenträgers 14 befindet sich ein weiteres Rückschlussblech 22, welches im radial äußeren Bereich mit dem Joch 20 in Kontakt steht und einen inneren axialen Erstreckungsabschnitt 24 aufweist, der sich in den Spulenträger 14 erstreckt.

Im radial Inneren dieses axialen Erstreckungsabschnitts 24 ist eine Führungshülse 26 angeordnet, welche sich bis in eine zentrale Ausnehmung 28 des Kerns 16, welche von einem radial äußeren und sich axial erstreckenden ringförmigen Vorsprung 30 des Kerns 16 umgeben ist, erstreckt und in der ein Anker 32 gelagert ist. Die Spule 12 wird über Leitungen 34, die in einem Stecker 36 münden, mit Strom versorgt.

Ein nach radial außen weisender Kragen 38 der Führungshülse 26 liegt an der vom Kern 16 abgewandten Seite axial gegen die flache Seite des zweiten Rückschlussblechs 22 an, die sich In Richtung des Jochs 20 erstreckt. Der Kragen 38 und mit ihm die gesamte Führungshülse 26 wird über ein am Aktorgehäuse 11 befestigtes Anschlussgehäuse 40, welches gemeinsam mit dem Aktorgehäuse 11 ein Ventilgehäuse des Schubumluftventils bilden, unter Zwischenlage eines ersten Dichtrings 42 gegen das Rückschlussblech 22 gedrückt, so dass ein Spalt zwischen dem Rückschlussblech 22 und dem Anschlussgehäuse 40 nach außen hin abgedichtet wird.

Das Anschlussgehäuse 40 weist einen im Wesentlichen plattenförmigen Grundkörper 44 mit einer inneren kreisförmigen Ausnehmung, durch die der Anker 32 ragt, auf, mit der das Anschlussgehäuse 40 am Aktorgehäuse 11 anliegt und der durch einen radial außen liegenden ringförmiger Vorsprung 46 des Aktorgehäuses 11 umgriffen wird. Dieser Vorsprung 46 dient zur Befestigung des Schubumluftventils an einem Strömungsgehäuse 48, in dem ein durch das Schubumluftventil in seinem Durchströmungsquerschnitt zu regelnder Kanal 50 und ein Ventilsitz 52 ausgebildet sind. Im geschlossenen Zustand des Ventils liegt ein Regelkörper 54 auf dem Ventilsitz 52 auf.

Der Regelkörper 54 besteht aus einem ersten Hohlkörper 56 und einem zweiten Hohlkörper 58, der im radial Inneren des ersten Hohlkörpers 56 angeordnet ist und mit dem ersten Hohlkörper 56 fest verbunden ist. Der erste Hohlkörper 56 weist eine über den Umfang geschlossene zylindrische Mantelfläche 60 auf, über welche der radial an der Mantelfläche 60 anliegende Teil des Kanals 50 vom axial am Regelkörper 54 anliegende Teil des Kanals 50 getrennt wird, wenn der Regelkörper 54 mit seiner Dichtung 62, welche am axial vom Anker 32 weg weisenden Ende des Regelkörpers 54 befestigt ist, auf dem Ventilsitz 52 aufliegt. Der wirksame Durchmesser dieser Dichtung 62 zur Auflage auf dem Ventilsitz 52 entspricht dem Durchmesser der zylindrischen Mantelfläche 60 des ersten Hohlkörpers 56. Im zweiten Hohlkörpers 58 sind zehn Öffnungen 64 ausgebildet, über die der axial anliegende Teil des Kanals 50 mit einem Gehäuseinnenraum 66 fluidisch stetig verbunden ist, der durch den ersten Hohlkörper 56, das Anschlussgehäuse 40 und die Führungshülse 26 begrenzt ist, so dass die Querschnittsfläche, auf die der Druck im Gehäuseinnenraum 66 in Schließrichtung des Schubumluftventils wirkt, gleich der Querschnittsfläche des Regelkörpers 54 ist, auf die der Druck in Öffnungsrichtung des Schubumluftventils wirkt.

Ein zum Anker 32 weisender zylindrischer Abschnitt des zweiten Hohlkörpers 58 ist mit einem Elastomer 68 umspritzt, welches axial gegen den Anker 32 anliegt. Um den Regelkörper 54 am Anker 32 zu befestigen, wird ein Verbindungselement 70 verwendet, welches am Anker 32 befestigt und im Wesentlichen radial Innerhalb des Elastomers 68 angeordnet ist. Das Verbindungselement 70 weist an der vom Anker 32 abgewandten Seite eine radiale Erweiterung 72 auf, die axial gegen das Elastomer 68 anliegt, dessen axial entgegengesetztes Ende gegen eine Einschnürung 74 des zweiten Hohlkörpers 58 anliegt, so dass dieser und mit ihm der erste Hohlkörper 56 am Anker 32 befestigt ist und mit dem Anker 32 bewegt wird. Um des Weiteren sicher zu stellen, dass bei Nichtbestromung der Spule 12 der Regelkörper 54 in seinem auf dem Ventilsitz 52 aufliegenden Zustand gestellt wird, ist im Innern des ersten Hohlkörpers 56 eine Schraubenfeder 94 angeordnet, die gegen den ersten Hohlkörpers 54 axial gespannt aufliegt und deren entgegengesetztes axiales Ende gegen den Grundkörper 44 des Anschlussgehäuses 40 anliegt. Diese Schraubenfeder 94 wird durch einen sich in Richtung des Regelkörpers 54 axial erstreckenden ringförmigen Vorsprung 96 des Anschlussgehäuses 40 radial in ihrer Position gehalten. Hierzu weist der Vorsprung 96 einen Außendurchmesser auf, der geringfügig kleiner ist als der Innendurchmesser der Schraubenfeder 94.

Das Anschlussgehäuse 40 weist eine sich axial erstreckende, ringförmige Gehäusewand 76 auf, die das Anschlussgehäuse 40 in diesem axialen Abschnitt radial begrenzt. An ihrer radialen Außenseite weist die Gehäusewand 76 eine ringförmige radiale Einschnürung 78 auf, an die sich am axial vom Aktorgehäuse 11 weg weisenden Ende eine Erweiterung 80 anschließt.

Erfindungsgemäß ist die Gehäusewand 76 radial von einem Stützring 82 umgeben, der eine Zylinderwand 84 aufweist, die fest gegen die Erweiterung 80 anliegt. Die Einschnürung 78 dient dabei dazu, dass eine geringfügige federnde Verformung der Gehäusewand 76 in diesem Bereich möglich ist, die ein Aufschieben des Stützrings erleichtert und dennoch durch die Erweiterung 80 eine Klemmkraft auf den Stützring 82 ausgeübt wird, so dass dieser auch während des Transports nicht zusätzlich befestigt werden muss.

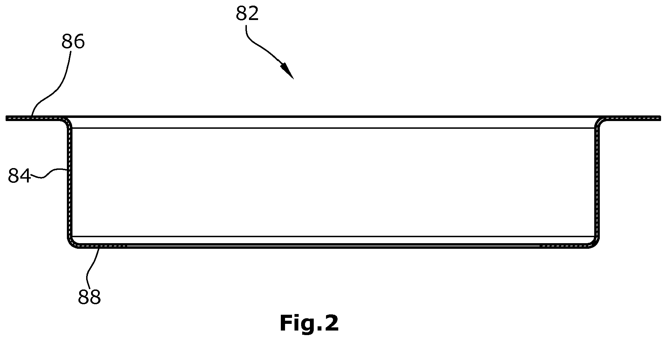

Wie insbesondere in Figur 2 zu erkennen ist, schließt sich am zum Aktorgehäuse 11 weisenden Ende der Zylinderwand 84 des Stützrings 82 eine radial nach außen weisende ringförmige Platte 86 an, die fest gegen den Grundkörper 44 des Anschlussgehäuses 40 anliegt und bei der Befestigung des Schubumluftventils am Strömungsgehäuse 48 ein Herausfallen des Stützrings 82 zuverlässig verhindert und gleichzeitig auch als Dichtung wirkt. Am entgegengesetzten axialen Ende weist der Stützring 82 eine ringförmige nach radial innen weisende Platte 88 auf, deren Innendurchmesser geringfügig größer ist als der Außendurchmesser des Regelkörpers 54 und diesen entsprechend radial umgibt. Auf dieser Platte 88 liegt ein im Querschnitt V-förmiger Radialdichtring 90 mit zwei Schenkeln axial auf, von denen der erste radial gegen die umfänglich geschlossene Mantelfläche 60 des Regelkörpers 54 anliegt und dessen zweiter Schenkel erfindungsgemäß gegen die radial begrenzende Gehäusewand 76 radial anliegt, so dass der Gehäuseinnenraum 66 im geschlossenen Zustand des Ventils ausschließlich über die Öffnungen 64 mit dem axial verlaufenden Teil des Kanals 50 im geschlossenen Zustand des Ventils verbunden ist und der radial verlaufende Teil des Kanals 50 in diesem Zustand vollständig zum Gehäuseinnenraum 66 abgedichtet ist.

Dies wird insbesondere durch die Anlage des Radialdichtrings 90 an der Gehäusewand 76 erreicht, denn auf diese Weise kann aus dem Gehäuseinnenraum 66 kein verschmutztes Gas in den Spalt zwischen dem Stützring 82 und der Gehäusewand 76 dringen. Die feste Anlage der Zylinderwand 84 an der als Klemmfläche wirkenden Erweiterung 80 sowie die große Auflagefläche der Platte 86 am Anschlussgehäuse 40 wirken ebenfalls als zuverlässige Abdichtungen. Der Stützring 82 wird aufgrund seiner einfachen Form als Tiefziehteil aus einem Blech kostengünstig hergestellt und ist somit thermisch belastbar. Auch neigt ein solches Metallteil nicht zu einer erhöhten Versottung, die aufgrund der mitgeführten Öle und des gegebenenfalls vorhandenen Abgases im geförderten Gasstrom zu befürchten ist.

Unmittelbar radial außerhalb der ringförmigen Platte 86 des Stützrings 82 ist am Grundkörper 44 ein zweiter Dichtring 98 zwischen dem Strömungsgehäuse 48 und dem Anschlussgehäuse 40 angeordnet, der bei der Befestigung des Schubumluftventils über das Aktorgehäuse 11 elastisch dichtend verformt wird. Durch diesen Dichtring 98 wird sichergestellt, dass kein Gas oder sonstige Schmutzstoffe oder Öle durch den Spalt zwischen dem Stützring 82 und dem Anschlussgehäuse 40 in einen Außenbereich dringen können.

Es wird somit ein Schubumluftventil geschaffen, welches eine zuverlässige Abdichtung zwischen dem den Dichtring abstützenden Stützring und dem Ventilgehäuse aufweist. Das Ventil ist einfach und kostengünstig herstellbar und montierbar und weist eine geringe Versottungsneigung auf. Des Weiteren ist eine vollständige Vormontage des Ventils auch vor dem Transport möglich.

Es sollte deutlich sein, dass der Schutzbereich der vorliegenden Erfindung nicht auf das beschriebene Ausführungsbeispiel begrenzt ist. Insbesondere ist die Aufteilung und Ausführung der Gehäuseteile des Ventilgehäuses bestehend aus Aktorgehäuse und Anschlussgehäuse ebenso veränderbar wie die Ausführung und Anbindung des Regelkörpers am Anker.

## Patentansprüche

1. Schubumluftventil für einen Verdichter eines Verbrennungsmotors mit einem Strömungsgehäuse (48), in dem ein Kanal (50) ausgebildet ist, einem elektromagnetischen Aktor (10),
einem Regelkörper (54), der mittels des Aktors (10) bewegbar ist, und mittels dessen ein Durchströmungsquerschnitt des Kanals (50) regelbar ist,
einem Gehäuseinnenraum (66), in dem ein mit dem Regelkörper (54) verbundener Anker (32) des elektromagnetischen Aktors (10) bewegbar ist,
Öffnungen (64) im Regelkörper (54), über die der Gehäuseinnenraum (66) mit einem axial am Regelkörper (54) anliegender Teil des Kanals (50) im Strömungsgehäuse (48) fluidisch verbunden ist,
einem Ventilgehäuse (11, 40), welches den elektromagnetischen Aktor (10) und einen axialen Erstreckungsabschnitt des Regelkörpers (54) radial umgibt,
einem Radialdichtring (90), über den der Gehäuseinnenraum (66) gegenüber einem radial am Regelkörper (54) anliegenden Teil des Kanals (50) abgedichtet ist und der axial auf einer nach radial innen weisenden ringförmigen Platte (88) eines Stützrings (82) aufliegt, der radial von außen mit einer Zylinderwand (84) gegen eine Gehäusewand (76) des Ventilgehäuses (11, 40) anliegt,
**dadurch gekennzeichnet, dass**
der Radialdichtring (90) radial außen gegen die Gehäusewand (76) des Ventilgehäuses (11, 40) anliegt, wobei der Stützring (82) eine Zylinderwand (84) aufweist, welche die Gehäusewand (76) des Ventilgehäuses (11, 40) umgibt und am zum Aktor (10) weisenden Ende sich von der Zylinderwand (84) des Stützrings (82) eine radial nach außen weisende ringförmige Platte (86) erstreckt, die axial zwischen dem Ventilgehäuse (11, 40) und dem Strömungsgehäuse (48) geklemmt ist.

2. Schubumluftventil für einen Verdichter eines Verbrennungsmotors nach Anspruch 1,
**dadurch gekennzeichnet, dass**
der Stützring (82) am vom Aktor (10) abgewandten axialen Ende der Zylinderwand (84) eine ringförmige nach radial innen weisende Platte (88) aufweist, deren Innendurchmesser geringfügig größer ist als der Außendurchmesser des Regelkörpers (54) und auf der der Radialdichtring (90) aufliegt.

3. Schubumluftventil für einen Verdichter eines Verbrennungsmotors nach einem der Ansprüche 1 oder 2,
**dadurch gekennzeichnet, dass**
der Stützring (82) ein Tiefziehteil aus Metall ist.

4. Schubumluftventil für einen Verdichter eines Verbrennungsmotors nach einem der vorhergehenden Ansprüche,
**dadurch gekennzeichnet, dass**
die Höhe der Zylinderwand (84) des Stützrings (82) geringfügig größer ist als die vom Aktor (10) weg weisende Gehäusewand (76) des Ventilgehäuses (11, 40).

5. Schubumluftventil für einen Verdichter eines Verbrennungsmotors nach einem der vorhergehenden Ansprüche,
**dadurch gekennzeichnet, dass**
radial außerhalb der radial nach außen weisenden ringförmigen Platte (86) ein Dichtring (98) zwischen dem Strömungsgehäuse (48) und dem Ventilgehäuse (11, 40) eingeklemmt ist.

6. Schubumluftventil für einen Verdichter eines Verbrennungsmotors nach einem der vorhergehenden Ansprüche,
**dadurch gekennzeichnet, dass**
der Stützring (82) über die Gehäusewand (76) am Ventilgehäuse (11, 40) befestigt ist.

7. Schubumluftventil für einen Verdichter eines Verbrennungsmotors nach Anspruch 6,
**dadurch gekennzeichnet, dass**
die Zylinderwand (84) des Stützrings (82) an ihrem axial vom Aktor (10) weg weisenden Ende derart gegen eine Erweiterung (80) des Ventilgehäuses (11, 40) anliegt, dass eine zur Befestigung dienende Klemmkraft erzeugt wird.

8. Schubumluftventil für einen Verdichter eines Verbrennungsmotors nach Anspruch 7,
**dadurch gekennzeichnet, dass**
am Ventilgehäuse (11, 40) zwischen der Erweiterung (80) und dem Aktor (10) eine Einschnürung (78) ausgebildet ist, welche federnd verformbar ist.

## Claims

1. A divert-air valve for a compressor of an internal combustion engine, comprising
a flow housing (48) in which a duct (50) is formed,
an electromagnetic actuator (10),
a control body (54) which can be moved by way of the actuator (10) and by way of which a throughflow cross section of the duct (50) can be controlled,
a housing interior (66) in which an armature (32), connected to the control body (54), of the electromagnetic actuator (10) is movable,
openings (64) in the control body (54), via which openings the housing interior (66) is fluidically connected to a part of the duct (50) in the flow housing (48) against which the control body (54) axially bears,
a valve housing (11, 40) which radially surrounds the electromagnetic actuator (10) and a part of the axial extent of the control body (54),
a radial sealing ring (90) by means of which the housing interior (66) is sealed off with respect to a part of the duct (50) against which the control body (54) radially bears, and which lies axially against a radially inwardly facing ring-shaped plate (88) of a support ring (82) which, by way of a cylinder wall (84), bears radially from the outside against a housing wall (76) of the valve housing (11, 40),
**characterized in that**
the radial sealing ring (90) bears radially at the outside against the housing wall (76) of the valve housing (11, 40), wherein the support ring (82) comprises a cylinder wall (84) which surrounds the housing wall (76) of the valve housing (11, 40) and that, at the end facing toward the actuator (10), a radially outward-facing annular plate (86) extends from the cylinder wall (84) of the support ring (82), said annular plate being axially clamped between the valve housing (11, 40) and the flow housing (48).

2. The divert-air valve for a compressor of an internal combustion engine according to claim 1,
**characterized in that,**
at the axial the end of the cylinder wall (84) facing away from the actuator (10), the support ring (82) comprises an annular, radially inward-facing plate (88) whose inner diameter is slightly larger than the outer diameter of the control body (54) and which has the radial sealing ring (90) resting on it.

3. The divert-air valve for a compressor of an internal combustion engine according to any one of claims 1 or 2,
**characterized in that**
the support ring (82) is a deep-drawn component made of metal.

4. The divert-air valve for a compressor of an internal combustion engine according to any one of the preceding claims,
**characterized in that**
the height of the cylinder wall (84) of the support ring (82) is slightly larger than the housing wall (76) of the valve housing (11, 40) facing away from the actuator (10).

5. The divert-air valve for a compressor of an internal combustion engine according to any one of the preceding claims,
**characterized in that,**
radially outside said radially outward-facing annular plate (86), a sealing ring (98) is clamped between the flow housing (48) and the valve housing (11,40).

6. The divert-air valve for a compressor of an internal combustion engine according to any one of the preceding claims,
**characterized in that**
the support ring (82) is fastened to the valve housing (11, 40) via the housing wall (76).

7. The divert-air valve for a compressor of an internal combustion engine according to claim 6,
**characterized in that,**
at its end axially facing away from the actuator (10), the cylinder wall (84) of the support ring (82) bears against a widened portion (80) of the valve housing (11, 40) in a manner generating a clamping force serving for fastening.

8. The divert-air valve for a compressor of an internal combustion engine according to claim 7,
**characterized in that,**
on the valve housing (11, 40) between said widened portion (80) and the actuator (10), a constriction (78) is formed which is resiliently deformable.

## Revendications

1. Vanne de dérivation d'air pour compresseur d'un moteur à combustion interne, comportant un boitier d'écoulement (48) dans lequel un conduit (50) est formé,
un actionneur (10) électromagnétique,
un corps de réglage (54) mobile à l'aide de l'actionneur (10), et à l'aide duquel une section transversale d'écoulement du conduit (50) peut être réglée,
un intérieur du boitier (66), dans lequel une armature (32) dudit actionneur (10) électromagnétique peut être déplacée, l'armature étant liée au corps de réglage (54),
ouvertures (64) dans le corps de réglage (54) par lesquelles l'intérieur du boitier (66) est en liaison fluidique dans le boitier d'écoulement (48) avec une partie du conduit (50) s'appliquant axialement sur le corps de réglage (54),
un boitier de vanne (11, 40) radialement entourant ledit actionneur (10) électromagnétique et une section axiale de l'étendue du corps de réglage (54),
un joint annulaire radial (90) par lequel l'intérieur du boitier (66) est étanché par rapport à une partie du conduit (50) s'appliquant radialement sur le corps de réglage (54), et qui repose axialement sur une plaque (86) annulaire d'un anneau de support (82), orientée radialement vers l'intérieur, l'anneau s'appliquant radialement depuis l'extérieur sur une paroi du boitier (76) du boitier de vanne (11, 40) par une paroi cylindrique (84),
**caractérisée en ce que**
le joint annulaire radial (90) repose radialement à l'extérieure sur la paroi du boitier (76) du boitier de vanne (11, 40), ledit anneau de support (82) présentant une paroi cylindrique (84) qui entoure la paroi du boitier (76) du boitier de vanne (11, 40), et qu'une plaque (86) annulaire, orientée radialement vers l'extérieur, s'étend, à l'extrémité orientée vers l'actionneur (10), à partir de la paroi cylindrique (84) dudit anneau de support (82), la plaque étant coincée entre ledit boitier de vanne (11, 40) et le boitier d'écoulement (48).

2. Vanne de dérivation d'air pour compresseur d'un moteur à combustion interne selon la revendication 1, **caractérisée en ce qu'**à l'extrémité axiale de la paroi cylindrique (84) détournée de l'actionneur (10), l'anneau de support (82) comporte une plaque (88) annulaire, orientée radialement vers l'intérieur, dont le diamètre intérieur est légèrement supérieur au diamètre extérieur du corps de réglage (54) et sur laquelle repose le joint annulaire radial (90).

3. Vanne de dérivation d'air pour compresseur d'un moteur à combustion interne selon la revendication 1 ou 2, **caractérisée en ce que** l'anneau de support (82) est une pièce emboutée en métal.

4. Vanne de dérivation d'air pour compresseur d'un moteur à combustion interne selon l'une quelconque des revendications précédentes, **caractérisée en ce que** la hauteur de la paroi cylindrique (84) de l'anneau de support (82) est légèrement supérieure à la paroi du boitier (76) du boitier de vanne (11, 40) détourné de l'actionneur (10).

5. Vanne de dérivation d'air pour compresseur d'un moteur à combustion interne selon l'une quelconque des revendications précédentes, **caractérisée en ce que**, radialement à l'extérieur de la plaque (86) dirigée radialement vers l'extérieur, un joint annulaire (98) est coincé entre le boitier d'écoulement (48) et ledit boitier de vanne (11, 40).

6. Vanne de dérivation d'air pour compresseur d'un moteur à combustion interne selon l'une quelconque des revendications précédentes, **caractérisée en ce que** l'anneau de support (82) est fixé sur le boitier de vanne (11, 40) par la paroi de boitier (76).

7. Vanne de dérivation d'air pour compresseur d'un moteur à combustion interne selon la revendication 6, **caractérisée en ce qu'**à son extrémité axialement détournée de l'actionneur (10), la paroi cylindrique (84) de l'anneau de support (82) repose sur un élargissement (80) du boitier de vanne (11, 40) de sorte qu'une force de coincement est générée pour la fixation.

8. Vanne de dérivation d'air pour compresseur d'un moteur à combustion interne selon la revendication 7, **caractérisée en ce qu'**un rétrécissement (78) est formé dans le boitier de vanne (11, 40) entre l'élargissement (80) et l'actionneur (10), ledit rétrécissement étant élastiquement déformable
